# EUROPÄISCHE PATENTANMELDUNG

(11) **EP 4 335 586 A1**
(43) Veröffentlichungstag der Anmeldung: **13.03.2024**
(21) Anmeldenummer: 23193943.0
(22) Anmeldetag: 29.08.2023
(51) Int. Cl.: B23Q 11/08, F16P 3/02

(54) **SCHUTZABDECKUNG ZUR ABDECKUNG VON BEWEGLICHEN MASCHINENTEILEN**

(30) Priorität: 09.09.2022 DE 102022122950
(71) Anmelder: Arno Arnold GmbH, 63179 Obertshausen (DE)
(72) Erfinder: Himbert, Benedikt, 63179 Obertshausen (DE); Himbert, Isabelle, 63179 Obertshausen (DE)
(74) Vertreter: advotec.

(57) **Zusammenfassung**

Die Erfindung betrifft eine Schutzabdeckung (1) mit mindestens einem Tragprofil (100) und mit mindestens einem in der Länge veränderlichen Schutzabdeckungselement (20), wobei das Tragprofil (100) ein erstes Verbindungsmittel (111) zur lösbaren Verbindung des Schutzabdeckungselements (20) aufweist, und wobei die Schutzabdeckung (1) in Bewegungsrichtung (XR) in einem vorgegebenen Bewegungsbereich (XB), der zwischen einer ersten Position (X1) der Schutzabdeckung (1) und einer zweiten Position (X2) der Schutzabdeckung (1) definiert ist, bewegbar ist, wobei das Tragprofil (100) um eine Achse (123) derart drehbar gelagert ist, dass die Höhe des Querschnitts (H) des Tragprofils (100) in der ersten Position (X1) im Wesentlichen senkrecht zur Bewegungsrichtung (XR) und in der zweiten Position (X2) parallel zur Bewegungsrichtung (XR) anordenbar ist.

## Beschreibung

Die Erfindung betrifft eine Schutzabdeckung zur Abdeckung von beweglichen Maschinenteilen nach dem Oberbegriff des Anspruchs 1 und eine Maschine umfassend die Schutzabdeckung nach Anspruch 16.

Im Stand der Technik sind Schutzabdeckungen bereits bekannt und dienen insbesondere, jedoch keineswegs ausschließlich, der Abdeckung von beweglichen Maschinenteilen oder dergleichen. Typischerweise weisen aus dem Stand der Technik bekannte Schutzabdeckungen in der Länge veränderliche Schutzabdeckungselemente auf, mittels welcher die Maschinenteile sowohl im ein- als auch im ausgefahrenen Zustand vor Fremdeinflüssen, wie beispielsweise Spänen, Staubpartikeln oder sonstigen Verschmutzungen, geschützt und auch gegenüber der Umgebung abgedichtet werden können. Durch die Längenveränderlichkeit der Schutzabdeckungselemente ist die Schutzabdeckung selbst in ihrer Gesamtlänge ebenfalls längenveränderlich. Derartige längenveränderliche Schutzabdeckungselemente sind mit einem Rahmenelement und/oder einem Stützrahmen verbunden, welche/welcher der Stabilisierung dieser, insbesondere der Abstützung dieser, dient. Beispielsweise sind die DE 10 2006 033 607 B4 und die DE 20 2012 008 987 U1 zu nennen.

Bei den aus dem Stand der Technik bekannten Schutzabdeckungen hat es sich jedoch als Nachteil erwiesen, dass die verwendeten Stützrahmen und/oder Rahmenelemente nicht die erforderliche Vorspannkraft und/oder Abstützung für eine gleichmäßige und widerstandsfreie Verfahrbarkeit der Schutzabdeckung aufweisen, da diese störungsanfällig auf einer Führung verschiebbar gelagert sind sowie oftmals durchhängen und folglich keine Abdichtung der beweglichen Maschinenteile gegenüber der Umgebung erzielen. Dies ist insbesondere bei sehr großen, schweren Schutzabdeckungen, wie sie typischerweise auch als Dachabdeckung verwendet werden, der Fall. Ein weiterer Nachteil besteht darin, dass die Schutzabdeckungen nur unter großem Krafteinsatz verfahren werden können.

Es besteht daher ein großer Bedarf an einer Schutzabdeckung, welche eine einfache, zuverlässige, dauerhafte, gleichmäßige und widerstandsfreie Verfahrbarkeit derselben ermöglicht. Weiterhin sollte die Schutzabdeckung auf einfache und zuverlässige Art und Weise die erforderliche Vorspannkraft und/oder Abstützung gewährleisten sowie eine anforderungsgemäße Abdichtung der beweglichen Maschinenteile gegenüber der Umgebung sicherstellen. Ein weiteres Augenmerk liegt auf der kostengünstigen Herstellbarkeit, der Langlebigkeit der Schutzabdeckung und der individuellen Anpassbarkeit der Schutzabdeckung an den zu schützenden Bereich der Maschine. Weiterhin sollte die Schutzabdeckung möglichst kompakt sowie platz- und bauraumsparend ausgestaltet sein. Die Erfindung hat sich daher die Aufgabe gestellt, eine Schutzabdeckung bereitzustellen, um die oben genannten Schwierigkeiten zu überwinden und um vor allem die zuverlässige Verfahrbarkeit der Schutzabdeckung bei kleinstmöglichem Platzbedarf zu gewährleisten.

Diese Aufgabe wird auf überraschend einfache aber wirkungsvolle Weise durch eine Schutzabdeckung nach der Lehre des unabhängigen Hauptanspruchs 1 und eine Maschine umfassend die Schutzabdeckung nach der Lehre des unabhängigen Hauptanspruchs 16 gelöst.

Erfindungsgemäß ist eine Schutzabdeckung mit mindestens einem Tragprofil und mit mindestens einem in der Länge veränderlichen Schutzabdeckungselement vorgeschlagen, wobei das Tragprofil ein erstes Verbindungsmittel zur lösbaren Verbindung des Schutzabdeckungselements aufweist und wobei die Schutzabdeckung in Bewegungsrichtung in einem vorgegebenen Bewegungsbereich, der zwischen einer ersten Position der Schutzabdeckung und einer zweiten Position der Schutzabdeckung definiert ist, bewegbar ist. Die Schutzabdeckung ist dadurch gekennzeichnet, dass das Tragprofil um eine Achse derart drehbar gelagert ist, dass die Höhe des Querschnitts des Tragprofils in der ersten Position der Schutzabdeckung im Wesentlichen senkrecht zur Bewegungsrichtung und dass die Höhe des Querschnitts des Tragprofils in der zweiten Position der Schutzabdeckung parallel zur Bewegungsrichtung anordenbar ist.

Die erfindungsgemäße Schutzabdeckung beruht auf dem Grundgedanken, dass das mit dem in der Länge veränderlichen Schutzabdeckungselement eine Einheit bildende Tragprofil maßgeblich zum Auszugsmaß der Schutzabdeckung beiträgt. Dies wird ermöglicht, indem einerseits das Tragprofil um die in die durch den Bewegungsbereich vorgegebene Bewegungsrichtung bewegbare Achse drehbar gelagert ist, so dass die Höhe des Querschnitts des Tragprofils in der ersten Position der Schutzabdeckung im Wesentlichen senkrecht zur Bewegungsrichtung anordenbar ist und die Höhe des Querschnitts des Tragprofils in der zweiten Position der Schutzabdeckung parallel zur Bewegungsrichtung anordenbar ist. Weiter wird dies durch das mit dem Tragprofil lösbar verbundene Schutzabdeckungselement ermöglicht. Weiter wird durch die Achse sichergestellt, dass die eingeleitete Energie, die Kraft und/oder das Moment in eine definierte Bewegung in dem vorgegebenen Bewegungsbereich und damit in bevorzugt zwei Bewegungsrichtungen, d. h. vor und zurück, umsetzbar ist. Auf diese Weise ist es möglich, eine gleichmäßige, zuverlässige und widerstandsfreie Verfahrbarkeit der Schutzabdeckung bei maximalem Auszugs- und maximalem Eingriffsmaß zu gewährleisten.

Der Begriff "Schutzabdeckung" betrifft insbesondere, jedoch keineswegs ausschließlich, eine Abdeckung von beweglichen Maschinenteilen, wie beispielsweise Werkzeugmaschinen oder dergleichen. Im Rahmen der Erfindung bezeichnet der Begriff daher die gesamte Schutzabdeckung, einen Bereich dieser und/oder mindestens ein Element dieser. Die erfindungsgemäße Schutzabdeckung umfasst mindestens ein Tragprofil und mindestens ein in der Länge veränderliches Schutzabdeckungselement. Die Schutzabdeckung, insbesondere das Tragprofil und das Schutzabdeckungselement, ist in einem vorgegebenen Bewegungsbereich bewegbar, insbesondere bewegbar geführt. Der Begriff "vorgegebener Bewegungsbereich" betrifft dabei die Auszugsrichtung der Schutzabdeckung, d. h. die Bewegungsrichtung, in welche die Schutzabdeckung beliebig oft vor und zurück verfahren und damit bewegt werden kann. Der vorgegebene Bewegungsbereich ist dabei zwischen einer ersten Position der Schutzabdeckung und einer zweiten Position der Schutzabdeckung definiert. Bevorzugt ist es denkbar, dass die erste Position der Schutzabdeckung die minimale Ausfahrweite der Schutzabdeckung definiert, so dass der Eingriffsbereich in die zu schützende Werkmaschine geöffnet ist. Weiter ist es denkbar, dass die zweite Position der Schutzabdeckung durch die maximale Ausfahrweite der Schutzabdeckung definiert ist, so dass kein Eingriff in die zu schützende Maschine möglich ist. Bevorzugt ist die Schutzabdeckung in dem vorgegebenen Bewegungsbereich und damit in mindestens eine, bevorzugt zwei, Bewegungsrichtungen, d. h. vor und/oder zurück, bewegbar. Dem Fachmann sind entsprechende Möglichkeiten der definierten Bewegung und/oder Führung von Komponenten bekannt.

Der Begriff "Tragprofil" umfasst mindestens ein zur Abstützung des lösbar damit verbundenen Schutzabdeckungselementes dienendes Profil, welches im vorgegebenen Bewegungsbereich der Schutzabdeckung, d. h. in mindestens eine, bevorzugt zwei, Bewegungsrichtungen, zwischen der ersten Position und der zweiten Position bewegbar, d. h. verfahrbar bzw. verschiebbar, ist. Im Rahmen der Erfindung ist es vorgesehen, dass das Tragprofil in gleichmäßigem Abstand über die gesamte Länge der Schutzabdeckung verteilt ist. Die Schutzabdeckung umfasst dabei mindestens ein, bevorzugt mindestens 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, gleich oder unterschiedlich ausgestaltete Tragprofile.

Erfindungsgemäß ist das Tragprofil um eine Achse, die in der durch den Bewegungsbereich vorgegebenen mindestens einen, bevorzugt zwei, Bewegungsrichtungen bewegbar, bevorzugt gleichmäßig bewegbar, ist, derart drehbar gelagert, dass die Höhe des Querschnitts des Tragprofils in der ersten Position im Wesentlichen senkrecht zur Bewegungsrichtung anordenbar ist und die Höhe des Querschnitts des Tragprofils in der zweiten Position der Schutzabdeckung parallel, bevorzugt im Wesentlichen parallel, zur Bewegungsrichtung anordenbar ist. Im Rahmen der Erfindung ist es dabei unerheblich, in welcher Art und Weise die Achse ausgestaltet ist, solange die zuvor beschriebene Bewegungsmöglichkeit des Tragprofils realisierbar ist. Derartige Achsen sind einem Fachmann bekannt, wie beispielsweise, jedoch keineswegs ausschließlich, eine Stange, ein Band, ein Seil, ein Flacheisen oder dergleichen.

Im Rahmen der Erfindung ist es als wesentlich erkannt worden, dass das Tragprofil ein erstes Verbindungsmittel aufweist, mittels welchem das in der Länge veränderliche Schutzabdeckungselement lösbar verbindbar, insbesondere direkt oder indirekt verbindbar, ist. Geeignete erste Verbindungsmittel zur Realisierung einer direkten oder indirekten Verbindung sind einem Fachmann bekannt. Eine direkte und lösbare Verbindung ist beispielsweise denkbar, indem allein durch den direkten Kontakt des ersten Verbindungsmittels mit dem Schutzabdeckungselement, beispielsweise durch ein Ineinanderschieben dieser, eine Verbindung herstellbar bzw., beispielsweise durch ein Auseinanderschieben dieser, wieder lösbar ist. Eine indirekte und lösbare Verbindung ist beispielsweise mittels eines geeigneten Verbindungselementes denkbar. Weiter ist es als wesentlich erkannt worden, dass das Tragprofil und das Schutzabdeckungselement eine Einheit bilden, wobei das Tragprofil aufgrund der drehbaren Lagerung maßgeblich zum Auszugsmaß der Schutzabdeckung beiträgt. Dabei ist es denkbar, dass das Schutzabdeckungselement ebenfalls, beispielsweise durch Dehnen, Drehen und/oder Strecken, zum Auszugsmaß der Schutzabdeckung beiträgt, wobei dies, wie einem Fachmann verständlich ist, maßgeblich von dem verwendeten Material abhängt. Das bedeutet, dass sowohl das Tragprofil als auch das Schutzabdeckungselement die beweglichen Maschinenteile sowohl im ein- als auch im ausgefahrenen Zustand, d. h. sowohl in der ersten Position der Schutzabdeckung als auch in der zweiten Position der Schutzabdeckung, vor Fremdeinflüssen schützt und zudem gegenüber der Umgebung abdichtet.

Der Begriff "Schutzabdeckungselement" betrifft mindestens ein in der Länge veränderliches Element, welches in die durch den Bewegungsbereich vorgegebene mindestens eine, bevorzugt in die zwei, Bewegungsrichtungen bewegbar ist und welches die beweglichen Maschinenteile sowohl im ein- als auch im ausgefahrenen Zustand, d. h. sowohl in der ersten Position der Schutzabdeckung als auch in der zweiten Position der Schutzabdeckung, vor Fremdeinflüssen schützt und zudem gegenüber der Umgebung abdichtet. Erfindungsgemäß ist bzw. sind mindestens ein, bevorzugt mindestens 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, gleich oder unterschiedlich ausgestaltete Schutzabdeckungselemente denkbar.

Der Begriff "Abdichtung" beschreibt ein Maß der Dichtigkeit der beweglichen Maschinenteile gegenüber der Umgebung, d. h. gegenüber einem Fremdeinfluss, d. h. einem Stoff, einem Fluid und/oder einem Gemisch davon. Der Begriff "Fremdeinfluss" betrifft beispielsweise, jedoch keineswegs ausschließlich, alle Einflüsse, welche einerseits den beweglichen Maschinenteilen, der Maschine und/oder andererseits der Umgebung schaden. Diesbezüglich sind beispielsweise Fluide, wie Feuchtigkeit und/oder Gase, Betriebsmittel, wie Öl und/oder Schmiermittel, Späne, Staubpartikel und/oder sonstige Verschmutzungen denkbar.

Es ist einem Fachmann verständlich, dass der Begriff "Dichtigkeit" ein relativer Begriff ist und dass es keine absolute Dichtigkeit der beweglichen Maschinenteile gegenüber der Umgebung gibt. Im Rahmen der Erfindung ist "Abdichtung" bzw. "Dichtigkeit" dahingehend zu verstehen, dass sich diese immer auf vorher bestimmte, anforderungsgemäße und/oder vorgegebene Rahmenbedingungen bezieht, so dass der bewegliche Maschinenteil zuverlässig vor dem Fremdeinfluss geschützt ist. Es ist dabei verständlich, dass es aufgrund der Bewegung der Maschinenteile dazu kommen kann, dass kurzzeitig ein Durchtritt des Fremdeinflusses zu der Maschine hin bzw. von der Maschine weg möglich ist. Dabei ist die Möglichkeit eines derartigen kurzzeitigen Durchtritts des Fremdeinflusses von untergeordneter Bedeutung.

Für einen Fachmann auf dem einschlägigen Gebiet ist es dabei offensichtlich, dass die erfindungsgemäße Schutzabdeckung keine absolute Dichtigkeit realisieren soll. Vielmehr ist es bevorzugt, dass der Durchtritt des Fremdeinflusses weitestgehend behindert ist, um Schäden an der Maschine und/oder eine Verschmutzung der Umgebung zu verhindern. Noch mehr bevorzugt ist der Durchtritt des Fremdeinflusses in eine der genannten Richtungen vollständig behindert, so dass zumindest teilweise oder kurzzeitig eine absolute Dichtigkeit erreichbar ist. Dabei ist die Dichtigkeit ebenfalls durch die konstruktive Ausgestaltung der Schutzabdeckung bzw. der Maschinenteile anpassbar. Dies ist allerdings mit erhöhten Kosten verbunden. Im Rahmen der vorliegenden Erfindung ist das Maß der Abdichtung mindestens 90 %, 91 %, 92 %, 93 %, 94 %, 95 %, 96 %, 97 %, 98 %, 99 %, 99,5 %, 99,6 %, 99,7 %, 99,8 %, 99,9 % oder mehr.

Im Rahmen der Erfindung gilt es zu berücksichtigen, dass die Erreichung und/oder Erhaltung der anforderungsgemäßen Vorspannkraft und/oder Abstützung, sowie das Maß der Abdichtung der Maschinenteile gegenüber der Umgebung, maßgeblich von dem verwendeten Material, dem Einsatzort, den Einsatzbedingungen und/oder dem Verwendungszweck der Schutzabdeckung abhängig sind. Dies ist einem Fachmann bekannt.

Der Begriff "bewegliches Maschinenteil" ist einem Fachmann bekannt und betrifft den vor Fremdeinflüssen zu schützenden, beweglichen Teil einer Maschine, insbesondere einer Werkzeugmaschine. Die Art, Größe, Dimension und/oder Ausgestaltung der Maschine ist dabei von untergeordneter Bedeutung.

Mittels der erfindungsgemäßen Schutzabdeckung ist es somit möglich, die gleichbleibende, widerstandsfreie, zuverlässige und störungsunanfällige Verfahrbarkeit der Schutzabdeckung mit gleichmäßig über die Länge der Schutzabdeckung verteilten Schutzabdeckungselementen sicherzustellen sowie die beweglichen Maschinenteile zuverlässig gegen Fremdeinflüsse und gegen Einflüsse aus der im Einsatz bedingten Umgebung abzudichten. Gleichzeitig wird es erreicht, dass der von der Schutzabdeckung abzudeckende Arbeitsbereich aufgrund der kompakten Ausgestaltung der Schutzabdeckung möglichst groß ist. Zudem ist es möglich, insbesondere aufgrund der einfachen, kompakten und in der Teilevielfalt reduzierten Bauweise, in erheblichem Maße Herstellungs- und Materialkosten einzusparen. Überdies benötigt die erfindungsgemäße Schutzabdeckung nur einen geringen Bauraum, so dass sich diese auch für die Abdeckung von beweglichen Maschinenteilen eignet, bei welchen der Platz für eine entsprechende Schutzabdeckung stark eingeschränkt ist bzw. schlecht zugänglich ist. Gleichzeitig ist das Gewicht der erfindungsgemäßen Schutzabdeckung sehr gering, so dass sich diese für alle denkbaren Anwendungen hinreichend eignet.

Vorteilhafte Weiterbildungen der Erfindung, welche einzeln oder in Kombination realisierbar sind, sind in den Unteransprüchen dargestellt.

In einer Ausgestaltung ist es denkbar, dass das Tragprofil einen länglichen und/oder hohen Querschnitt aufweist, welcher eine optimale Steifigkeit besitzt. Dabei ist es im Rahmen der Erfindung erkannt worden, dass ein länglicher und/oder hoher Querschnitt zu einem geringen Durchhang und damit zu der Erhaltung der Dichtigkeit und der anforderungsgemäßen Vorspannkraft und/oder Abstützung der Schutzabdeckung beiträgt. Dies wird durch die konkrete Ausgestaltung des Tragprofils mit einem länglichen Querschnitt erreicht, indem die schmale Seite des Tragprofils in der zweiten Position das Gewicht, d. h. das Gewicht aus Tragprofil und Schutzabdeckungselement, trägt, und indem die Achse das Biegemoment abfängt. Im Rahmen der Erfindung ist es dabei erkannt worden, dass der längliche und/oder hohe Querschnitt des Tragprofils aufgrund dessen drehbarer Lagerung nicht zu einer Vergrößerung der Aufbauhöhe bzw. Bauhöhe der Schutzabdeckung beiträgt. So ist es erfindungsgemäß möglich, den länglichen und/oder hohen Querschnitt des Tragprofils, insbesondere aufgrund dessen Implementation im Querschnitt der Schutzabdeckung, als Auszugsmaß der Schutzabdeckung zu nutzen. Bevorzugt entspricht die Höhe des länglichen und/oder hohen Profilquerschnitts des Tragprofils der Aufbauhöhe der gesamten Schutzabdeckung, um den für die Schutzabdeckung erforderlichen Bauraum bei optimaler Ausnutzung der Auszugsverhältnisse des Tragprofils und des Schutzabdeckungselementes möglichst kompakt zu halten.

Weiter ist es denkbar, dass die drehbare Lagerung des Tragprofils in einem Winkel α erfolgt, welcher zwischen einer Schwenkebene des Tragprofils und der Bewegungsrichtung gebildet ist, wobei der Winkel α in der ersten Position 80° bis 100° beträgt und/oder in der zweiten Position 0° bis 79° beträgt. Der Begriff "Schwenkebene" betrifft dabei eine gedachte, in Bezug zur Drehachse stehende Mittelebene des Tragprofils. Erfindungsgemäß ist es vorgesehen, dass das Tragprofil um die Achse schwenkt, welche in der Ebene der Bewegungsrichtung liegt. Bevorzugt ist die Schwenkebene zwischen der Achse und einem der Achse gegenüberliegenden Punkt des Tragprofils gebildet, noch mehr bevorzugt zwischen der Achse und dem ersten Verbindungsmittel. Es ist einem Fachmann dabei offensichtlich, dass die Mittelebene, je nach äußerer Ausgestaltung des Tragprofils, auch versetzt zur Mitte desselben angeordnet sein kann. Wichtig ist es lediglich, dass sich die Mittelebene innerhalb der maximalen äußeren Ausgestaltung des Tragprofils befindet. Bevorzugt beträgt der Winkel α in der ersten Position mindestens 80°, 81°, 82°, 83°, 84°, 85°, 86°, 87°, 88°, 89°, 90°, 91°, 92°, 93°, 94°, 95°, 96°, 97°, 98°, 99°, oder 100°. Weiter bevorzugt beträgt der Winkel α in der ersten Position höchstens 100°, 99°, 98°, 97°, 96°, 95°, 94°, 93°, 92°, 91°, 90°, 89°, 88°, 87°, 86°, 85°, 84°, 83°, 82°, 81° oder 80°. Bevorzugt beträgt der Winkel α in der zweiten Position mindestens 0°, 1°, 2°, 3°, 4°, 5°, 6°, 7°, 8°, 9°, 10°, 11°, 12°, 13°, 14°, 15°, 16°, 17°, 18°, 19°, 20°, 21°, 22°, 23°, 24°, 25°, 26°, 27°, 28°, 29°, 30°, 31°, 32°, 33°, 34°, 35°, 36°, 37°, 38°, 39°, 40°, 41°, 42°, 43°, 44°, 45°, 46°, 47°, 48°, 49°, 50°, 51°, 52°, 53°, 54°, 55°, 56°, 57°, 58°, 59°, 60°, 61°, 62°, 63°, 64°, 65°, 66°, 67°, 68°, 69°, 70°, 71°, 72°, 73°, 74°, 75°, 76°, 77°, 78° oder 79°. Weiter bevorzugt beträgt der Winkel α in der zweiten Position höchstens 79°, 78°, 77°, 76°, 75°, 74°, 73°, 72°, 71°, 70°, 69°, 68°, 67°, 66°, 65°, 64°, 63°, 62°, 61°, 60°, 59°, 58°, 57°, 56°, 55°, 54°, 53°, 52°, 51°, 50°, 49°, 48°, 47°, 46°, 45°, 44°, 43°, 42°, 41°, 40°, 39°, 38°, 37°, 36°, 35°, 34°, 33°, 32°, 31°, 30°, 29°, 28°, 27°, 26°, 25°, 24°, 23°, 22°, 21°, 20°, 19°, 18°, 17°, 16°, 15°, 14°, 13°, 12°, 11°, 10°, 9°, 8°, 7°, 6°, 5°, 4°, 3°, 2° oder 1°. Es einem Fachmann dabei verständlich, dass der Winkel α in der ersten Position bzw. der zweiten Position abhängig von der konkreten Ausgestaltung und von der Steifigkeit der verwendeten Materialien, d. h. dem Material des Tragprofils und dem Material des Schutzabdeckungselementes, ist.

Der Begriff "im Wesentlichen" bedeutet, dass es lediglich zu einer geringen, insbesondere nicht signifikanten, Veränderung, Änderung und/oder Abweichung von der entsprechenden Bedingung kommt. Bevorzugt ist diese Veränderung, Änderung und/oder Abweichung gleichmäßig. Vorliegend bedeutet der Begriff "im Wesentlichen senkrecht zur Bewegungsrichtung", dass die Höhe des Querschnitts des Tragprofils zwischen 80° und 100° in Bezug zur Bewegungsrichtung anordenbar ist. Weiter bedeutet vorliegend der Begriff "parallel", dass die Höhe des Querschnitts des Tragprofils zwischen 0° und 79° in Bezug zur Bewegungsrichtung anordenbar ist, wohingegen der Begriff "im Wesentlichen parallel zur Bewegungsrichtung" bedeutet, dass die Höhe des Querschnitts des Tragprofils zwischen 0° und 50° in Bezug zur Bewegungsrichtung anordenbar ist.

Weiter ist es denkbar, dass das Schutzabdeckungselement drehbar gelagert ist, wobei die drehbare Lagerung des Schutzabdeckungselements in einem Winkel β erfolgt, welcher zwischen der Schwenkebene des Tragprofils und der Mittelebene des Schutzabdeckungselements gebildet ist, wobei der Winkel β 0° bis 180° beträgt. Wie bereits an anderer Stelle ausgeführt, ist es einem Fachmann dabei offensichtlich, dass die Mittelebene, je nach äußerer Ausgestaltung des Schutzabdeckungselements, auch versetzt zur Mitte desselben angeordnet sein kann. Wichtig ist es lediglich, dass sich die Mittelebene innerhalb der maximalen äußeren Ausgestaltung des Schutzabdeckungselements befindet. Bevorzugt beträgt der Winkel β mindestens 0°, 1°, 2°, 3°, 4°, 5°, 6°, 7°, 8°, 9°, 10°, 11°, 12°, 13°, 14°, 15°, 16°, 17°, 18°, 19°, 20°, 21°, 22°, 23°, 24°, 25°, 26°, 27°, 28°, 29°, 30°, 31°, 32°, 33°, 34°, 35°, 36°, 37°, 38°, 39°, 40°, 41°, 42°, 43°, 44°, 45°, 46°, 47°, 48°, 49°, 50°, 51°, 52°, 53°, 54°, 55°, 56°, 57°, 58°, 59°, 60°, 61°, 62°, 63°, 64°, 65°, 66°, 67°, 68°, 69°, 70°, 71°, 72°, 73°, 74°, 75°, 76°, 77°, 78°, 79°, 80°, 81°, 82°, 83°, 84°, 85°, 86°, 87°, 88°, 89°, 90°, 91°, 92°, 93°, 94°, 95°, 96°, 97°, 98°, 99°, 100°, 101°, 102°, 103°, 104°, 105°, 106°, 107°, 108°, 109°, 110°, 111°, 112°, 113°, 114°, 115°, 116°, 117°, 118°, 119°, 120°, 121°, 122°, 123°, 124°, 125°, 126°, 127°, 128°, 129°, 130°, 131°, 132°, 133°, 134°, 135°, 136°, 137°, 138°, 139°, 140°, 141°, 142°, 143°, 144°, 145°, 146°, 147°, 148°, 149°, 150°, 151°, 152°, 153°, 154°, 155°, 156°, 157°, 158°, 159°, 160°, 161°, 162°, 163°, 164°, 165°, 166°, 167°, 168°, 169°, 170°, 171°, 172°, 173°, 174°, 175°, 176°, 177°, 178°, 179° oder 180°. Weiter bevorzugt beträgt der Winkel β höchstens 180°, 179°, 178°, 177°, 176°, 175°, 174°, 173°, 172°, 171°, 170°, 169°, 168°, 167°, 166°, 165°, 164°, 163°, 162°, 161°, 160°, 159°, 158°, 157°, 156°, 155°, 154°, 153°, 152°, 151°, 150°, 149°, 148°, 147°, 146°, 145°, 144°, 143°, 142°, 141°, 140°, 139°, 138°, 137°, 136°, 135°, 134°, 133°, 132°, 131°, 130°, 129°, 128°, 127°, 126°, 125°, 124°, 123°, 122°, 121°, 120°, 119°, 118°, 117°, 116°, 115°, 114°, 113°, 112°, 111°, 110°, 109°, 108°, 107°, 106°, 105°, 104°, 103°, 102°, 101°, 100°, 99°, 98°, 97°, 96°, 95°, 94°, 93°, 92°, 91°, 90°, 89°, 88°, 87°, 86°, 85°, 84°, 83°, 82°, 81°, 80°, 79°, 78°, 77°, 76°, 75°, 74°, 73°, 2°, 71°, 70°, 69°, 68°, 67°, 66°, 65°, 64°, 63°, 62°, 61°, 60°, 59°, 58°, 57°, 56°, 55°, 54°, 53°, 52°, 51°, 50°, 49°, 48°, 47°, 46°, 45°, 44°, 43°, 42°, 41°, 40°, 39°, 38°, 37°, 36°, 35°, 34°, 33°, 32°, 31°, 30°, 29°, 28°, 27°, 26°, 25°, 24°, 23°, 22°, 21°, 20°, 19°, 18°, 17°, 16°, 15°, 14°, 13°, 12°, 11°, 10°, 9°, 8°, 7°, 6°, 5°, 4°, 3°, 2°, 1° oder 0°. Es einem Fachmann dabei verständlich, dass der Winkel β abhängig von der konkreten Ausgestaltung und von der Steifigkeit der verwendeten Materialien, d. h. dem Material des Tragprofils und dem Material des Schutzabdeckungselementes, ist.

In noch einer Ausgestaltung ist es denkbar, dass das Tragprofil ein Vollwandträger, insbesondere ein Blechkantprofil oder ein Stangengussprofil und/oder ein I-, P-, T-, H-, TH-, Z-, U- oder ein L-Profil, ein Hohlprofilträger, insbesondere mit einem Rechteckprofil oder einem Vierkantprofil, und/oder ein Hohlkastenträger ist. Das Profil des Tragprofils ist bevorzugt ein Dreieck, ein Rechteck, ein Sechseck, insbesondere ein regelmäßiges Sechseck, oder ein Polygon. Vollwandträger, Hohlprofilträger und Hohlkastenträger zeichnen sich durch ihr leichtes Gewicht und den geringen Materialeinsatz bei der Herstellung aus. Das geringe Gewicht bei gleichbleibender Stabilität ist, insbesondere im Hinblick auf die Abdichtung und erforderliche Vorspannkraft und/oder Abstützung der Schutzabdeckung, besonders bei großen Schutzabdeckungen wichtig.

Überdies ist es denkbar, dass das Tragprofil aus einem eigensteifen Kunststoffmaterial, einer eigensteifen Kunststoffverbindung, einem Metall, einer Metallverbindung und/oder einem Gemisch daraus ist. Geeignete Materialien nebst den innewohnenden Eigenschaften sind einem Fachmann bekannt. Bevorzugt ist das Tragprofil aus Aluminium. Im Rahmen der Erfindung ist es dabei erkannt worden, dass besonders die Kombination aus einem physikalisch steifen Material mit der konkreten Ausgestaltung bzw. Form des Tragprofils mit dem länglichen Querschnitt zur Erreichung der anforderungsgemäßen Vorspannkraft und/oder Abstützung der Schutzabdeckung beiträgt.

Weiterhin ist es denkbar, dass das Tragprofil ein zweites Verbindungsmittel aufweist, wobei das erste Verbindungsmittel an einem ersten Ende des Tragprofils und das zweite Verbindungsmittel an einem dem ersten Ende gegenüberliegenden zweiten Ende des Tragprofils angeordnet ist. Bevorzugt ist das zweite Verbindungsmittel zur lösbaren Verbindung, bevorzugt zudem zur drehbaren Lagerung, eines weiteren Schutzabdeckungselementes ausgestaltet. Erfindungsgemäß ist es weiter vorgesehen, dass die drehbare Lagerung des weiteren Schutzabdeckungselements in einem Winkel ρ erfolgt, welcher zwischen einer Ebene, welche zwischen der Achse des Tragprofils und dem zweiten Verbindungsmittel gebildet ist, und der Bewegungsrichtung gebildet ist, wobei der Winkel ρ 0° bis 180° beträgt. Für den Winkel ρ gelten die entsprechenden, an anderer Stelle für den Winkel β ausführlich beschriebenen Definitionen und Bedingungen.

Im Rahmen der Erfindung ist es dabei erkannt worden, dass die lösbare Verbindung des Schutzabdeckungselementes mit dem ersten und/oder zweiten Verbindungsmittel des Tragprofils unmittelbar, d. h. direkt, oder mittelbar, d. h. indirekt und mittels eines geeigneten Elementes, wie an anderer Stelle zuvor beschrieben, erfolgt. Mittels dieser Ausgestaltung ist es möglich, den Aufbau der Schutzabdeckung in Bewegungsrichtung beliebig zu vergrößern und damit die maximale Auszugslänge zu erhöhen. Weiterhin bietet der Aufbau der Schutzabdeckung den Vorteil, dass eine platzsparende Lagerhaltung aufgrund von Wiederholteilen möglich ist.

In einer Weiterbildung ist es denkbar, dass das erste und/oder zweite Verbindungsmittel eine Gelenk-, Keder-, Klick-, Klemm-, Rast-, Schraub-, Niet- und/oder Steckverbindung ist. Bevorzugt ist das erste und/oder zweite Verbindungsmittel ein Klemmprofil aus Aluminium. Auf diese Weise ist es möglich, einzelne Schutzabdeckungselemente im eingebauten Zustand zu Wartungs-, Instandhaltungs- und/oder Reparaturzwecken auszutauschen, da diese vor Ort einfach zusammen- und wieder auseinandergebaut werden können. Dabei wird aufgrund der erfindungsgemäßen ersten und/oder zweiten Verbindungsmittel eine platzsparende Montage ohne seitlichen Einschub ermöglicht, und diese kann werkzeugfrei durch entsprechend geschultes Personal erfolgen. Da Wartungs-, Instandhaltungs- und/oder Reparaturarbeiten vor Ort durch einfachen Austausch der betreffenden Elemente erfolgen können, können in erheblichem Maße wartungsbedingte Kosten reduziert sowie Stillstandzeiten der Maschine gänzlich vermieden werden.

In noch einer Weiterbildung ist das Schutzabdeckungselement ein Faltenelement und/oder ein Rollo, wobei das Schutzabdeckungselement aus einem Kunststoffmaterial, einer Kunststoffverbindung, einem Metall, insbesondere einem Dünnblech, einem Textil und/oder einem Gemisch daraus ist. Der Begriff "Faltenelement" ist einem Fachmann bekannt und betrifft ein in der Länge veränderliches band- oder streifenförmiges Element. Bevorzugt entspricht die maximale Länge des Faltenelements dem vorgegebenen Bewegungsbereich der Schutzabdeckung. Der Begriff "Rollo" ist einem Fachmann bekannt und betrifft ein auf einer Welle aufrollbares und/oder aufwickelbares und in der Länge veränderliches Element. Bevorzugt entspricht die maximale Länge des Rollos dem vorgegebenen Bewegungsbereich der Schutzabdeckung. Geeignete Materialien sind einem Fachmann bekannt.

Des Weiteren ist es denkbar, dass das Schutzabdeckungselement faltbar, aufrollbar, eigensteif, thermoplastisch, zumindest bereichsweise transparent und/oder zumindest bereichsweise transluzent ist. Es ist einem Fachmann bekannt, dass ein thermoplastisches Material ein Kunststoff ist, welcher sich in einem bestimmten Temperaturbereich reversibel verformen lässt. Zudem ist ein thermoplastischer Kunststoff verschweißbar. Weiter ist es einem Fachmann bekannt, dass eine zumindest bereichsweise transparente und/oder transluzente Schutzabdeckung die Beleuchtungsverhältnisse derart verbessert, dass einfallendes Licht zumindest anteilig durch das Schutzabdeckungselement dringen kann, so dass die Beleuchtungsverhältnisse auf der jeweils anderen Seite der Schutzabdeckung deutlich verbessert werden. Damit eignet sich die erfindungsgemäße Schutzabdeckung auch als Dachabdeckung, bei welcher sich mitunter der Einsatz einer zusätzlichen Beleuchtung innerhalb des Maschinenraums erübrigt bzw. die Anwendungsbereiche die Möglichkeit des Einsatzes einer Schutzabdeckung in denjenigen Fällen, in denen dieser Schutz bisher unterblieben ist, eröffnen. Es ist einem Fachmann dabei verständlich, dass der Begriff "zumindest bereichsweise transparent" und "zumindest bereichsweise transluzent" abhängig von der Position der Schutzabdeckung im vorgegebenen Bewegungsbereich ist.

In noch einer Weiterbildung ist es denkbar, dass die Schutzabdeckung mindestens eine Führungsschiene umfasst. Dabei ist es denkbar, dass zudem mindestens ein im Bereich der Führungsschiene angeordnetes, form- und/oder kraftschlüssig mit der Führungsschiene verbundenes Führungsmittel umfasst ist. Bevorzugt ist das Führungsmittel lösbar oder unlösbar und/oder direkt oder indirekt mit der Achse verbunden. Weiter bevorzugt ist das Führungsmittel oberhalb der Führungsschiene anordenbar. Im Rahmen der Erfindung ist es denkbar, dass die Führungsschiene gerade, gekrümmt, geneigt und/oder gebogen ausgestaltet und/oder ausgerichtet ist. Bevorzugt weist die Schutzabdeckung mindestens eine, noch mehr bevorzugt 2, 3, 4, 5, 6 oder mehr, gleich oder unterschiedlich ausgestaltete Führungsschienen auf. Weiter ist es denkbar, dass die mindestens zwei Führungsschienen synchron zueinander oder unterschiedlich ausgestaltet und/oder ausgerichtet sind sowie parallel oder unterschiedlich zueinander verlaufen. Auf diese Weise ist es möglich, eine definierte und gleichmäßige Führung der Schutzabdeckung zur Vermeidung von Verkantungen und/oder Überspringen zu realisieren. Weiterhin wird eine definierte und gleichmäßige Abstützung des Tragprofils erreicht. Dabei ist der Querschnitt der Führungsschiene von untergeordneter Bedeutung. So ist es denkbar, dass dieser rund, eckig oder polygon ist. Das Führungsmittel kann ein Gleitlager oder Schieber sein, um eine gleitende Führung auf der Führungsschiene zu realisieren. Weiterhin ist es denkbar, dass das Führungsmittel eine Laufrolle oder ein Ritzel ist, welche/s drehbar gelagert ist.

In noch einer Weiterbildung ist es denkbar, dass die Führungsschiene eine Rundführung und/oder eine Zahnstangenführung ist. Bevorzugt ist die Führung eine Rundführung und eine Zahnstangenführung. Die Ausgestaltung als Rundführung bietet den Vorteil, dass diese keine Kantenträger aufweist, spänefreundlich ist und weniger Verschmutzung aufweist, sowie eine gleichmäßige, sichere und widerstandsfreie Verfahrbarkeit eines Führungsmittels ermöglicht. Die Kombination aus Rundführung und Zahnstangenführung in einer Führungsschiene bietet neben der Teilereduktion den Vorteil der Verringerung der Bauraumhöhe.

In noch einer Weiterbildung ist es denkbar, dass die Schutzabdeckung mindestens eine Antriebseinrichtung aufweist. Bevorzugt ist die Antriebseinrichtung lösbar oder unlösbar und/oder direkt oder indirekt mittels den einem Fachmann bekannten Mitteln mit der Führungsschiene verbunden. Dem Fachmann sind entsprechende Möglichkeiten der Verbindung von Komponenten bekannt. Der Begriff "Antriebseinrichtung" betrifft eine konstruktive Einheit, welche dazu geeignet ist, eine Energie, eine Kraft und/oder ein Moment in die Führungsschiene und/oder ein direkt oder indirekt damit verbundenes Element, wie beispielsweise das Führungsmittel, einzuleiten, so dass mittels des Zusammenspiels eine lineare Bewegung realisierbar ist. Aufgrund der linearen Bewegung wird das mit der Antriebseinrichtung verbundene Tragprofil im vorgegebenen Bewegungsbereich bewegt. Einem Fachmann ist es dabei offensichtlich, dass die Antriebseinrichtung und die Führungsschiene mittels dem Fachmann bekannter Maßnahmen in Kontakt miteinander stehen, um die Verfahrbarkeit der Schutzabdeckung sicherzustellen. Im Rahmen der Erfindung ist es von untergeordneter Bedeutung, wie die Antriebseinrichtung angetrieben, positioniert und/oder ausgestaltet ist. So ist es beispielsweise denkbar, dass die Antriebseinrichtung verbrennungsmotorisch, elektrisch, hydraulisch, pneumatisch, manuell und/oder aus einer Mischung daraus angetrieben ist. Weiterhin ist es denkbar, dass die Antriebseinrichtung ein oder mehrere Übersetzungsgetriebe aufweist. Bevorzugt ist es denkbar, dass die Schutzabdeckung 1, 2, 3, 4, 5, 6 oder mehr gleich oder unterschiedlich ausgestaltete Antriebseinrichtungen aufweist.

Der Begriff "lineare Bewegung" betrifft die definierte Bewegung der Schutzabdeckung innerhalb des durch die erste und die zweite Position der Schutzabdeckung vorgegebenen Bewegungsbereichs, welche dadurch realisiert wird, dass die über die Antriebseinrichtung in die Führung und/oder ein direkt oder indirekt damit verbundenes Element, wie beispielsweise das Führungsmittel, eingeleitete Energie, Kraft und/oder das Moment in eine lineare Bewegung umgesetzt wird. Dabei ist es denkbar, dass die Führungsschiene zusätzlich ein Führungsmittel umfasst, so dass die Umsetzung der linearen Bewegung aufgrund des Zusammenspiels aus Führungsschiene und Führungsmittel erfolgt. Dabei bezeichnet der Begriff "linear" lediglich eine definierte Bewegung des mit der Antriebseinrichtung und/oder der Führungsschiene verbundenen Tragprofils entlang der Führungsschiene in eine, bevorzugt zwei, Bewegungsrichtungen, d. h vor und zurück. Einem Fachmann ist es verständlich, dass die lineare Bewegung dabei direkt abhängig von der Ausgestaltung und/oder Ausrichtung der Führung ist. Dabei ist es denkbar, dass die Führungsschiene gerade, gekrümmt, geneigt und/oder gebogen ist, so dass die daraus folgende lineare Bewegung in eine, bevorzugt zwei, definierte Bewegungsrichtungen, d. h. vor und zurück, der Ausgestaltung und/oder Ausrichtung der Führung folgt und eine gerade, gekrümmte, geneigte und/oder gebogene Bewegung ist.

Überdies ist es denkbar, dass die Schutzabdeckung mindestens einen feststehenden Endrahmen und/oder eine Blende umfasst. Geeignete Materialien sind einem Fachmann bekannt.

Weiterhin ist es denkbar, dass das Tragprofil mindestens einen Dämpfer umfasst. Der Begriff "Dämpfer" ist einem Fachmann bekannt und betrifft ein Element, welches dazu geeignet ist, ungewollte Schwingungen zu reduzieren, Unebenheiten, beispielsweise der Führungsschiene, auszugleichen, eine Anschlagfunktion und/oder eine Abbremsung zu realisieren. Dabei ist es erfindungsgemäß erkannt worden, dass der Dämpfer zudem dazu geeignet ist, die Tragprofile in der ersten Position, d. h. im vollständig zusammengeschobenen Zustand der Schutzabdeckung, voneinander zu trennen und/oder einen Zusammenstoß dieser zu verhindern. Geeignete Dämpfer sind einem Fachmann bekannt. Bevorzugt ist es denkbar, dass das Tragprofil mindestens 1, 2, 3, 4, 5, 6 oder mehr gleich oder unterschiedlich ausgestaltete Dämpfer aufweist.

Es wird davon ausgegangen, dass die Definitionen und Ausführungen der oben genannten Begriffe für alle in dieser Beschreibung im Folgenden beschriebenen Aspekte gelten, sofern nichts anderes angegeben ist.

Erfindungsgemäß ist weiterhin eine Maschine, insbesondere Werkzeugmaschine, umfassend mindestens eine Schutzabdeckung nach einem der Ansprüche 1 bis 15 vorgeschlagen.

Weitere Einzelheiten, Merkmale und Vorteile der Erfindung ergeben sich aus der nachfolgenden Beschreibung der bevorzugten Ausführungsbeispiele in Verbindung mit den Unteransprüchen. Hierfür können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugszeichen in einzelnen Figuren bezeichnen gleiche oder funktionsgleiche bzw. hinsichtlich ihrer Funktionalität einander entsprechende Elemente.

### Im Einzelnen zeigen:

- **Fig. 1**: eine isometrische Darstellung einer erfindungsgemäßen Schutzabdeckung in der ersten Position;
- **Fig. 2**: eine Seitenansicht einer erfindungsgemäßen Schutzabdeckung in der ersten Position;
- **Fig. 3**: eine Schnittansicht einer erfindungsgemäßen Schutzabdeckung in einer Position, welche zwischen der ersten Position und der zweiten Position ist;
- **Fig. 4**: eine Schnittansicht eines erfindungsgemäßen Tragprofils; und
- **Fig. 5**: eine Frontalansicht auf eine erfindungsgemäße Schutzabdeckung.

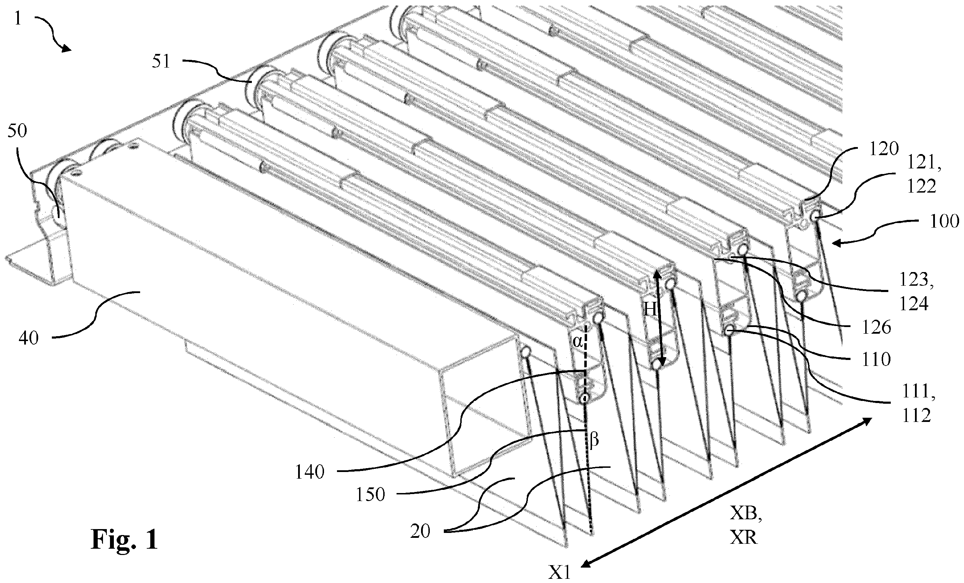

**Fig. 1** zeigt eine isometrische Darstellung einer erfindungsgemäßen Schutzabdeckung 1 mit einem feststehenden Endrahmen 40 im vollständig zusammengefahrenen Zustand der Schutzabdeckung 1, d. h. in einer ersten Position X1 eines vorgegebenen Bewegungsbereiches XB der Bewegungsrichtung XR. Dabei ist es zu erkennen, dass die Schutzabdeckung 1 mehrere, gleichmäßig in Bewegungsrichtung XR verteilte, Tragprofile 100 aufweist, welche an einem ersten Ende 110 eine Aufnahme 112 zur Aufnahme eines ersten Verbindungsmittels 111 und an einem dem ersten Ende 110 gegenüberliegenden Ende 120 einen Aufnahmebereich 122 für ein zweites Verbindungsmittel 121 aufweisen. Weiter ist es erkennbar, dass das Tragprofil 100 mittels des ersten Verbindungsmittels 111 mit einem Schutzabdeckungselement 20, hier ein zwei Faltungen ausbildendes Faltenelement, verbunden ist und eine Einheit bildet. Jede Einheit ist dabei über das zweite Verbindungsmittel 121 mit dem Schutzabdeckungselement 20 der benachbarten Einheit verbunden. Im konkreten Ausführungsbeispiel sind das erste und zweite Verbindungsmittel 111, 121 ein Klemmprofil aus Aluminium, welches eine lösbare Verbindung des Schutzabdeckungselementes 20 ermöglicht. In einer Weiterbildung ist es denkbar, dass das Schutzabdeckungselement 20 zudem in einem Winkel β drehbar gelagert sein kann, wobei der Winkel β zwischen einer Schwenkebene 140 des Tragprofils 100 und einer Mittelebene 150 des Schutzabdeckungselements 20 gebildet werden kann. Zudem ist es zu erkennen, dass das Tragprofil 100 eine Aufnahme 126 für einen nicht dargestellten Dämpfer sowie eine Aufnahme 124 für eine Achse 123 aufweist, auf welcher das Tragprofil 100 drehbar gelagert ist.

Weiter ist es in Fig. 1 erkennbar, dass das Tragprofil 100 mittels eines an der Achse 123 angeordneten Führungsmittels in der Art einer Laufrolle 51 auf einer Rundführung 50 beweglich und sicher geführt ist. Dabei ist es gut zu erkennen, dass die Höhe des länglich ausgestalteten Querschnitts H des Tragprofils 100 im vollständig zusammengefahrenen Zustand der Schutzabdeckung 1, d. h. in der ersten Position X1, im Wesentlichen senkrecht zur Bewegungsrichtung XR angeordnet ist. Im konkreten Ausführungsbeispiel beträgt der Winkel α, welcher zwischen der Schwenkebene 140 des Tragprofils 100 und der Bewegungsrichtung XR gebildet ist, ca. 90°.

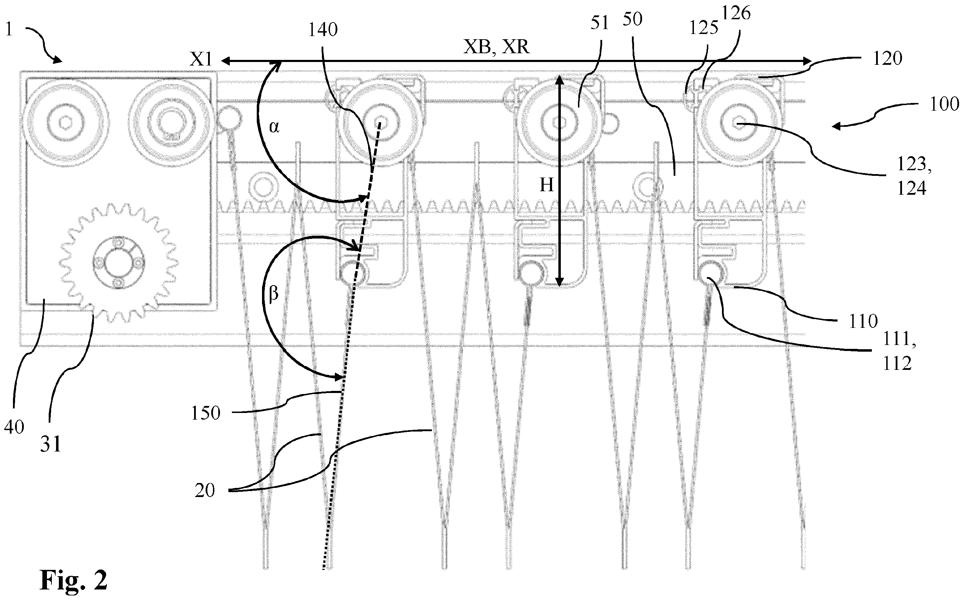

In der **Fig. 2** ist eine Seitenansicht der erfindungsgemäßen Schutzabdeckung 1 aus der Fig. 1 gezeigt. Dabei ist es gut zu erkennen, dass das Tragprofil 100 beidseitig an der Achse 123, auf welcher dieses drehbar gelagert ist, ein Führungsmittel 51 in Form einer Laufrolle aufweist, mittels welcher das Tragprofil 100 auf der als kombinierte Rundführung mit Zahnstangenführung ausgestalteten Führungsschiene 50 geführt ist. Weiter ist in der Fig. 2 ein im feststehenden Endrahmen 40 angeordnetes, mit einer nicht dargestellten Antriebseinrichtung verbundenes Antriebsrad 31 in Form eines Ritzels dargestellt, welches in die Zahnstangenführung 50 eingreift und damit eine gleichmäßige Bewegung der Schutzabdeckung 1 im vorgegebenen Bewegungsbereich XB in Bewegungsrichtung XR ermöglicht. In Fig. 2 ist die Schutzabdeckung 1 im vollständig zusammengeschobenen Zustand in der ersten Position X1 gezeigt, in welcher die Höhe des länglichen Querschnitts H des Tragprofils 100 im Wesentlichen senkrecht zur Bewegungsrichtung XR angeordnet ist. In der Fig. 2 ist es zudem gut zu erkennen, dass das Tragprofil 100 ein Hohlkammerprofil mit rechteckigem Querschnitt H aufweist, wobei dieses zusätzlich zu den in Fig. 1 beschriebenen Elementen einen in der Aufnahme 126 angeordneten Dämpfer 125 aufweist.

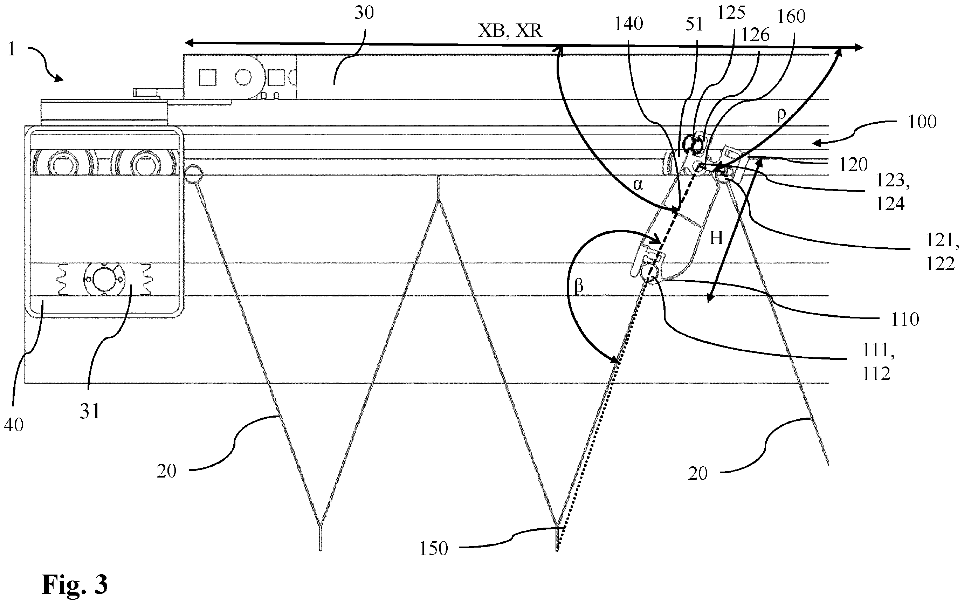

In der Fig. 3 ist die in den Fig. 1 und Fig. 2 beschriebene erfindungsgemäße Schutzabdeckung 1 während des Verfahrens in Bewegungsrichtung XR gezeigt, wobei sich diese zwischen dem vollständig zusammengefahrenen Zustand in der ersten Position und dem vollständig ausgefahrenen Zustand in der zweiten Position der vorgegebenen Bewegungsrichtung XB befindet. Dabei ist es gut erkennbar, dass das Tragprofil 100 einen etwas abgeänderten, länglichen Querschnitt H gegenüber dem des Tragprofils der Fig. 1 und 2 aufweist, wobei beide einen länglichen Querschnitt H mit einem Hohlkammerprofil aufweisen.

Weiter ist es in Fig. 3 gut zu erkennen, dass der Winkel α zwischen der Schwenkebene 140 des Tragprofils 100 und der Bewegungsrichtung XR gebildet ist, wohingegen der Winkel β zwischen der Schwenkebene 140 des Tragprofils 100 und der Mittelebene 150 des Schutzabdeckungselements 20 gebildet werden kann. Weiter ist es zu erkennen, dass ein Winkel ρ zwischen einer, zwischen der Achse 123 des Tragprofils 100 und dem zweiten Verbindungsmittel 121 gebildeten, Ebene 160 und der Bewegungsrichtung XR gebildet werden kann. Das erste und zweite Verbindungsmittel 111, 121, hier ein Klemmprofil aus Aluminium, ermöglicht dabei eine lösbare Verbindung des Schutzabdeckungselementes 20.

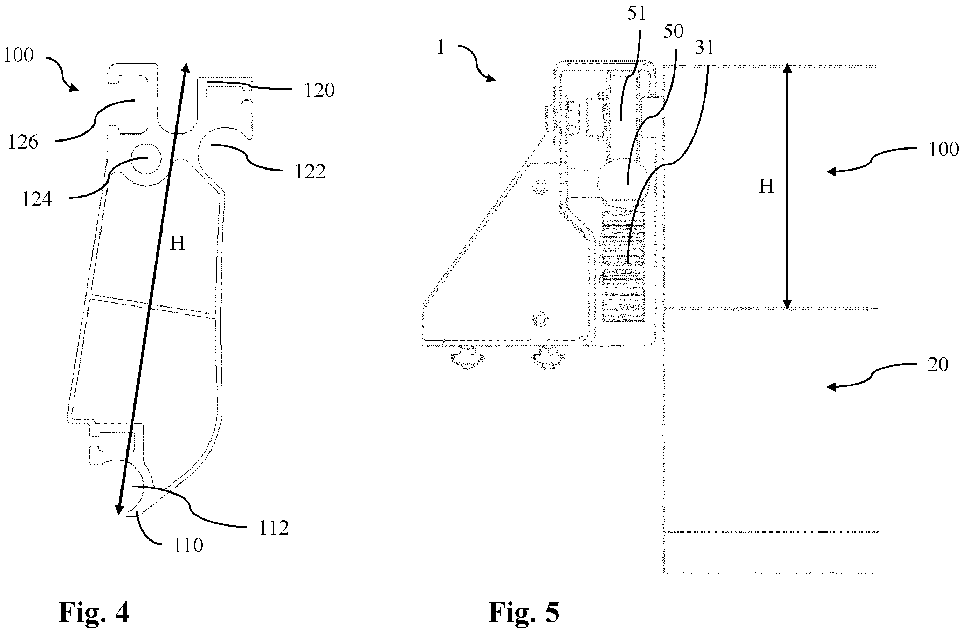

Der etwas abgeänderte, längliche Querschnitt H des Tragprofils in Fig. 3, welcher im Detail in **Fig. 4** dargestellt ist, weist, ebenso wie der des Tragprofils der Fig. 1 und 2, eine an einem ersten Ende 110 angeordnete Aufnahme 112 für ein erstes Verbindungsmittel 111 zur lösbaren Verbindung mit dem Schutzabdeckungselement 20, hier als ein zwei Faltungen ausbildendes Faltenelement dargestellt, auf. Weiter weist das Tragprofil 100 ein dem ersten Ende 110 gegenüberliegendes zweites Ende 120, an welchem eine Aufnahme 122 für ein zweites Verbindungsmittel 121 zur Verbindung mit einem weiteren Schutzabdeckungselement 20 angeordnet ist, auf. Weiterhin weist das Tragprofil 100 am zweiten Ende eine Aufnahme 126 für einen Dämpfer 125 und eine Aufnahme 124 für die das Tragprofil 100 drehbar lagernde Achse 123 auf. Überdies ist es gut zu erkennen, dass die mittels der Antriebseinrichtung 30 einleitbare Energie, Kraft und/oder das Moment über das Antriebsrad 31, hier als Ritzel dargestellt, auf die Führungsschiene 50 und die oberhalb der Führungsschiene 50 angeordnete und an der Achse 123 angeordnete Laufrolle 51 einleitbar ist.

In der **Fig. 5** ist eine Frontalansicht auf die erfindungsgemäße Schutzabdeckung 1 dargestellt, aus welcher erkennbar ist, dass die Aufbauhöhe, d. h. die Höhe des Querschnitts H des Tragprofils 100, im Wesentlichen der Summe aus der Höhe der Antriebseinrichtung, der Führungsschiene 50 und des auf der Führungsschiene 50 angeordneten Führungsmittels 51 entspricht. Weiterhin ist das mit dem Tragprofil 100 verbundene Schutzabdeckungselement 20 dargestellt.

## Patentansprüche

1. Schutzabdeckung (1) mit mindestens einem Tragprofil (100) und mit mindestens einem in der Länge veränderlichen Schutzabdeckungselement (20), wobei das Tragprofil (100) ein erstes Verbindungsmittel (111) zur lösbaren Verbindung des Schutzabdeckungselements (20) aufweist, und wobei die Schutzabdeckung (1) in Bewegungsrichtung (XR) in einem vorgegebenen Bewegungsbereich (XB), der zwischen einer ersten Position (X1) der Schutzabdeckung (1) und einer zweiten Position (X2) der Schutzabdeckung (1) definiert ist, bewegbar ist,
**dadurch gekennzeichnet,**
**dass** das Tragprofil (100) um eine Achse (123) derart drehbar gelagert ist, dass die Höhe des Querschnitts (H) des Tragprofils (100) in der ersten Position (X1) im Wesentlichen senkrecht zur Bewegungsrichtung (XR) und in der zweiten Position (X2) parallel zur Bewegungsrichtung (XR) anordenbar ist.

2. Schutzabdeckung (1) nach Anspruch 1,
**dadurch gekennzeichnet,**
**dass** das Tragprofil (100) einen länglichen und/oder hohen Querschnitt (H) aufweist.

3. Schutzabdeckung (1) nach Anspruch 1 oder 2,
**dadurch gekennzeichnet,**
**dass** die drehbare Lagerung des Tragprofils (100) in einem Winkel (α) erfolgt, wobei der Winkel (α) in der ersten Position (X1) 80° bis 100° beträgt und/oder in der zweiten Position (X2) 0° bis 79° beträgt.

4. Schutzabdeckung (1) nach einem der vorhergehenden Ansprüche,
**dadurch gekennzeichnet,**
**dass** das Schutzabdeckungselement (20) drehbar gelagert ist, wobei die drehbare Lagerung des Schutzabdeckungselements (20) in einem Winkel (β) erfolgt, wobei der Winkel (β) 0° bis 180° beträgt.

5. Schutzabdeckung (1) nach einem der vorhergehenden Ansprüche,
**dadurch gekennzeichnet,**
**dass** das Tragprofil (100) ein Vollwandträger, ein Hohlprofilträger und/oder ein Hohlkastenträger ist.

6. Schutzabdeckung (1) nach einem der vorhergehenden Ansprüche,
**dadurch gekennzeichnet,**
**dass** das Tragprofil (100) aus einem eigensteifen Kunststoffmaterial, einer eigensteifen Kunststoffverbindung, einem Metall, einer Metallverbindung und/oder einem Gemisch daraus ist.

7. Schutzabdeckung (1) nach einem der vorhergehenden Ansprüche,
**dadurch gekennzeichnet,**
**dass** das Tragprofil (100) ein zweites Verbindungsmittel (121) aufweist, wobei das erste Verbindungsmittel (111) an einem ersten Ende (110) des Tragprofils (100) und das zweite Verbindungsmittel (121) an einem dem ersten Ende (110) gegenüberliegenden zweiten Ende (120) des Tragprofils (100) angeordnet ist.

8. Schutzabdeckung (1) nach einem der vorhergehenden Ansprüche,
**dadurch gekennzeichnet,**
**dass** das erste und/oder zweite Verbindungsmittel (111, 121) eine Gelenk-, Keder-, Klick-, Klemm-, Rast-, Schraub-, Niet- und/oder Steckverbindung ist.

9. Schutzabdeckung (1) nach einem der vorhergehenden Ansprüche,
**dadurch gekennzeichnet,**
**dass** das Schutzabdeckungselement (20) ein Faltenelement und/oder ein Rollo ist und aus einem Kunststoffmaterial, einer Kunststoffverbindung, einem Metall, einem Textil und/oder einem Gemisch daraus ist.

10. Schutzabdeckung (1) nach Anspruch 9,
**dadurch gekennzeichnet,**
**dass** das Schutzabdeckungselement (20) faltbar, aufrollbar, eigensteif, thermoplastisch, zumindest bereichsweise transparent und/oder zumindest bereichsweise transluzent ist.

11. Schutzabdeckung (1) nach einem der vorhergehenden Ansprüche,
**dadurch gekennzeichnet,**
**dass** die Schutzabdeckung (1) eine Führungsschiene (50) aufweist.

12. Schutzabdeckung (1) nach Anspruch 11,
**dadurch gekennzeichnet,**
**dass** die Führungsschiene (50) eine Rundführung und/oder Zahnstangenführung ist.

13. Schutzabdeckung (1) nach einem der vorhergehenden Ansprüche,
**dadurch gekennzeichnet,**
**dass** die Schutzabdeckung (1) mindestens eine Antriebseinrichtung (30) aufweist und/oder dass die Schutzabdeckung (1) einen Endrahmen (40) und/oder eine Blende umfasst.

14. Schutzabdeckung (1) nach einem der vorhergehenden Ansprüche,
**dadurch gekennzeichnet,**
**dass** das Tragprofil (100) mindestens einen Dämpfer (125) aufweist.

15. Maschine, insbesondere Werkzeugmaschine, umfassend eine Schutzabdeckung nach einem der Ansprüche 1 bis 14.
